# EUROPÄISCHE PATENTSCHRIFT

(11) **EP 1 792 643 B1**
(45) Veröffentlichungstag und Bekanntmachung des Hinweises auf die Patenterteilung: **24.11.2010**
(21) Anmeldenummer: 05026443.1
(22) Anmeldetag: 05.12.2005
(51) Int. Cl.: B01D 1/22, B01J 19/18, B01F 7/00, B01F 13/10

(54) **Grossvolumiger Reaktor beziehungsweise Dünnschichtverdampfer mit einem Vormischaggregat**
High volume reactor and/or thin film evaporator employing a premixing device
Réacteur à grand volume respectivement évaporateur à couche mince combiné avec un dispositif pré-melangeur

(43) Veröffentlichungstag der Anmeldung: 06.06.2007
(73) Patentinhaber: Buss-SMS-Canzler GmbH, 35510 Butzbach (DE)
(72) Erfinder: Peters, Hans, 79576 Weil (DE); Naef, Rainer, 8953 Dietikon (CH)
(74) Vertreter: Schaad, Balass, Menzl & Partner AG

(56) Entgegenhaltungen:
- EP-A- 0 194 812
- CH-A- 288 154
- DE-A1- 4 000 311
- DE-A1- 19 638 567
- FR-A- 925 563
- GB-A- 2 116 158
- JP-A- 60 070 219
- US-A- 5 534 113
- US-B1- 6 402 362

## Beschreibung

Die vorliegende Erfindung betrifft einen grossvolumigen Reaktor gemäss dem Oberbegriff des Anspruchs 1 und die Verwendung des grossvolumiger Reaktors als Dünnschichtverdampfer gemäss dem Oberbegriff des Anspruch 8.

Grossvolumige Reaktoren beziehungsweise Dünnschichtverdampfer sind allgemein bekannt und werden unter anderem auch bei der Erzeugung und/oder Verarbeitung von Kunststoffen eingesetzt.

Grossvolumige Reaktoren können zum einen als Kneter oder Mischer ausgebildet sein, wie beispielsweise in der europäischen Patentanmeldung EP-A-1 477 223 oder in der älteren europäischen Patentanmeldung mit Anmeldenummer EP 05008591 offenbart. Diese beiden Schriften zeigen grossvolumige Reaktoren, welche jeweils mehrere Reaktorrotoren aufweisen. Aus der europäischen Patentanmeldung EP-A-1 417 998 ist ebenfalls ein grossvolumiger Reaktor mit nur einem Rotor bekannt.

Dünnschichtapparate sind beispielsweise aus EP-A-0 960 639 und DD-A-226 778 bekannt.

Bei den bekannten grossvolumigen Reaktoren beziehungsweise Dünnschichtverdampfer wird ein Ausgangsstoff beziehungsweise werden mehrere Ausgangsstoffe über eine oder mehrere Produktzuflussöffnungen einem Reaktorraum des grossvolumigen Reaktors beziehungsweise des Dünnschichtverdampfers zugeführt, in welchem der Ausgangsstoff beziehungsweise die Ausgangsstoffe mittels eines Reaktorrotors prozessiert werden. Die Ausgangsstoffe können dabei als reine Flüssigkeiten, als zumindest teilweise gasförmige Komponenten, als Suspensionen, als Emulsionen, als Lösungen, als Pasten, als Viskoseschmelzen, als granuläre Feststoffe, als feine Feststoffe, als Schäume oder als Kombination davon vorliegen.

Die bekannten grossvolumigen Reaktoren beziehungsweise Dünnschichtverdampfer weisen verschiedene Nachteile auf, da die einzelnen Ausgangsstoffe entweder getrennt voneinander oder durch dieselbe Reaktorraumzuflussöffnung dem Reaktorraum zugeführt werden können.

Falls mehrere Niederviskose-Ausgangsstoffe dem Reaktorraum eines Kneters beziehungsweise eines Mischers zugeführt werden, vermischen sich diese Niederviskosen-Ausgangsstoffe schlecht, da der Reaktorrotor verhältnismässig langsamer dreht, wodurch die beiden Niederviskosen-Ausgangsstoffe zwei Phasen innerhalb des Reaktorraums bilden können, die sich nicht miteinander vermischen.

Weiter können kleinste Mengen eines zweiten Ausgangsstoffs, beispielsweise eines Katalysators, nur schlecht in einen ersten Ausgangsstoff viel grösserer Menge mittels den bekannten grossvolumigen Reaktoren eingemischt werden. Falls der zweite Ausgangsstoff bereits ausserhalb des Reaktorraums dem ersten Ausgangsstoff beigemischt wird, kann eine Reaktion bereits ausserhalb des Reaktorraums beginnen. Dies kann in einer Zuleitung zum Reaktorraum zu einer Verstopfung führen. Falls jedoch der zweite Ausgangsstoff direkt in den Reaktorraum zugeführt wird, besteht das Problem, dass die kleine Menge des zweiten Ausgangsstoffes sich lediglich sehr schlecht und langsam im Reaktorraum mit dem ersten Ausgangsstoff vermischen könnte. Dies kann im Reaktorraum zu einem inhomogenen Produkt und/oder grossen Agglomeraten führen, da der erste Ausgangsstoff teilweise stark beziehungsweise fast gar nicht mit dem zweiten Ausgangsstoff reagieren kann. Grosse Agglomerate führen zu einem Produkt mit uneinheitlichen Eigenschaften. Weiter können grosse Agglomerate zu einer thermischen Schädigung des Produktes führen, da die bei der Reaktion entstehende Wärme nur sehr schlecht abgeführt werden kann. Weiter können grosse Agglomerate zu unzulässig hohen mechanischen Belastungen des Reaktors oder des Dünnschichtverdampfers führen.

Falls verschiedene Ausgangsstoffe einem Mischer oder einem Kneter zugeführt werden, welche sich nicht gut miteinander mischen lassen, können im Reaktorraum auch Entmischungseffekte auftreten.

Weiter wird die Produktqualität ebenfalls negativ beeinflusst, falls stark miteinander reagierende Ausgangsstoffe über mehrere Reaktorraumzuflussöffnungen in den Reaktorraum eingeführt werden, da dabei lokale Konzentrationsunterschiede innerhalb des Reaktorraumes zu einer uneinheitlichen Produktqualität führen können.

Weiter können sich durch exotherme Reaktionen, die beim Zusammenführen verschiedener Ausgangsstoffe ausserhalb des grossvolumigen Reaktors auftreten, Probleme mit dem Abführen der dabei erzeugten Wärme ergeben.

Die bekannten grossvolumigen Reaktoren mit verhältnismässig langsam drehenden Reaktorrotoren weisen ebenfalls Probleme auf, falls einer der Ausgangsstoffe in einer Gasphase und der andere Ausgangsstoff in einer flüssigen oder in einer schmelzartigen Phase vorliegt, und der in Gasphase vorliegende Ausgangsstoff in den in flüssiger beziehungsweise schmelzartiger Phase vorliegenden Ausgangsstoff eindispergiert werden soll.

Ebenso ist es mit den bekannten grossvolumigen Reaktoren schwierig, feine granuläre Stoffsysteme in eine fluide Phase gleichmässig einzuarbeiten.

Aus den Dokumenten EP 1 048 342 A, GB 2 116 158 A, EP 0 194 812 A, DE 40 00 311 A und US 5,534,113 sind Kombinationen von Reaktoren beziehungsweise Dünnschichtverdampfern mit Vormischaggregaten bekannt. Weiter offenbart das Dokument FR 925 563 ein Radialmischaggregat.

Der vorliegenden Erfindung liegt die Aufgabe zugrunde, einen grossvolumigen Reaktor beziehungsweise einen Dünnschichtverdampfer zu schaffen, der von den Nachteilen des Standes der Technik - wie oben diskutiert - befreit ist.

Diese Aufgabe wird mit einem grossvolumigen Reaktor gemäss Anspruch 1 und der Verwendung des grossvolumigen Reaktors als Dünnschichtverdampfer gemäss Anspruch 8 gelöst.

Erfindungsgemäss weist der grossvolumige Reaktor beziehungsweise der Dünnschichtverdampfer ein Vormischaggregat auf, dessen Aggregatauslassöffnung bei der Reaktorraumzuflussöffnung angeordnet ist. Dadurch wird erreicht, dass das Vormischaggregat verbindungsrohrlos am Gehäuse angeordnet werden kann, wodurch Rohrleitungen und mit denen zusammenhängende Engpässe vermieden werden können. Weiter ist dadurch ermöglicht, dass ein dem Vormischaggregat zugeführter Ausgangsstoff im Vormischaggregat aufbereitet - beispielsweise vorgemischt - werden kann und danach sofort in den Reaktorraum des grossvolumigen Reaktors abgegeben wird, in welchem der aufbereitete Stoff weiterverarbeitet wird. Es ist auch denkbar, dass im Vormischaggregat ein Stoff ausgefällt wird, welcher ebenfalls dem Reaktorraum zugeführt wird.

Dadurch kann erreicht werden, dass beim Zusammenführen anfänglich rasch und/oder heftig reagierender Ausgangsstoffe, diese unmittelbar vor dem Reaktorraum des grossvolumigen Reaktors oder des Dünnschichtverdampfers mittels des Vormischaggregats vorgemischt und/oder aufbereitet werden. Der vom Vormischaggregat aufbereitete Stoff wird direkt dem Reaktorraum zugeführt, in welchem dieser zu einem Produkt weiterverarbeitet wird. Durch die Verwendung des Vormischaggregats kann die Effizienz des grossvolumigen Reaktors beziehungsweise des Dünnschichtverdampfers im Vergleich zum Stand der Technik gesteigert oder die Verarbeitung gewisser Ausgangsstoffe mittels eines grossvolumigen Reaktors beziehungsweise Dünnschichtverdampfers überhaupt erst ermöglicht werden, da im Vormischaggregat die beim Zusammenführen der Ausgangsstoffe gegebenenfalls auftretenden heftigen und/oder raschen Reaktionen direkt vor dem Reaktorraum und eine daran anschliessende langsame Reaktion im Reaktorraum unter Einwirkung des Reaktorrotors auf den aufbereiteten Stoff statt findet.

Ausgangsstoffe können als reine Flüssigkeiten, als zumindest teilweise gasförmige Komponenten, als Suspensionen, als Emulsionen, als Lösungen, als Pasten, als Viskoseschmelzen, als granuläre Feststoffe, als feine Feststoffe, als Schäume oder als Kombination davon dem Vormischaggregat zugeführt werden.

Das Vormischaggregat weist einen angetriebenen Rotor, der mit einem Stator zusammenwirkt, auf. Dadurch wird das vermischen des Ausgangsstoffs oder der Ausgangsstoffe im Vormischaggregat aktiv ausgeführt. Durch den Rotor und den mit diesem zusammenwirkenden Stator wird der Ausgangsstoff gut zu einem aufbereiteten Stoff vermischt, der sofort durch die Aggregatauslassöffnung hindurch dem Reaktorraum zugeführt wird. Weiter kann die Form des dem Reaktorraum zugeführten, aufbereiteten Stoffs für diesen geeignet beeinflusst werden, beispielsweise durch Erzeugung eines granulären aufbereiteten Stoffes aus zwei flüssigen Ausgangsstoffen, oder durch Erzeugung eines gelartigen aufbereiteten Stoffs, der zur Weiterverarbeitung im Reaktorraum besonders geeignet ist.

Es wird ein Radialvormischaggregat zum Vermischen des Ausgangsstoffes verwendet. Da dessen Rotor eine hohe Umlaufzahl aufweisen kann, eignet sich diese Ausführungsform besonders gut zum Vermischen zweier unterschiedlicher Phasen, beispielsweise einer gasförmigen Phase mit einer flüssigen beziehungsweise schmelzeartigen Phase.

Gemäss einer bevorzugten Ausführungsform nach Anspruch 3, weist das Gehäuse einen Eingangsstutzen auf, in welchen das Vormischaggregat auf oder eingesetzt ist. Dadurch ist es möglich, das Vormischaggregat auf sehr einfache Art und Weise nahe dem Reaktorraum beziehungsweise unmittelbar ausserhalb des Reaktorraums anzuordnen.

Gemäss einer bevorzugten Ausführungsform nach Anspruch 5 greift der Stator in den becherförmigen Rotor ein und ein aus dem Rotor und dem Stator ausgebildeter Radialmischer ist zwischen einem Vorraum, in welchen die Produktzuflussöffnung mündet, und dem Reaktorraum angeordnet. Durch den in den Rotor eingreifenden Stator ist der Vorraum durch den Radialmischer vom Reaktorraum abgetrennt und ein durch die Produktzuflussöffnung dem Vorraum zugeführter Ausgangsstoff wird durch den Radialmischer aufbereitet.

Gemäss einer bevorzugten Ausführungsform nach Anspruch 6 führt ein Stoffzuflussrohr durch den Vorraum hindurch, dessen weitere Produktzuflussöffnung radial innerhalb des Rotormantels und des Statorteils endet. Mittels dieses Stoffzuflussrohrs ist es möglich einen weiteren Ausgangsstoff durch die weitere Produktzuflussöffnung in Hauptförderrichtung erst unmittelbar vor dem Radialmischer mit den Ausgangsstoff zusammenzuführen, der durch den Radialmischer sofort stark mit dem Ausgangsstoff vermischt wird. Insbesondere können durch diese Ausführungsform kleinste Mengen des weiteren Ausgangsstoffs - beispielsweise einem Katalysators - mit dem Ausgangsstoff - beispielsweise einem Monomer - vermischt werden.

Gemäss einer bevorzugten Ausführungsform nach Anspruch 7 ist es möglich, ein weiterer Ausgangsstoff direkt einem Bereich des Vormischaggregates zuzuführen, in welchem der Ausgangsstoff stark mit dem weiteren Ausgangsstoff vermischt wird.

Weitere bevorzugte Ausbildungsformen des erfindungsgemässen grossvolumigen Reaktors und des Dünnschichtverdampfer ergeben sich aus der Detailbeschreibung und der Zeichnung.

Im Folgenden wird die Erfindung anhand in der Zeichnung dargestellter Ausführungsbeispielen näher erläutert.

Es zeigen rein schematisch:
- Fig. 1: im durch ein Vormischaggregat hindurch gelegten Querschnitt entlang der in Fig. 2 gezeigten Linie I-I, einen erfindungsgemässen, einwelligen grossvolumigen Reaktor mit einem ein Reaktorraum begrenzenden Zylindermantel eines Gehäuses, einem im Reaktorraum horizontal angeordneten Reaktorrotor und einem als Radialvormischaggregat ausgebildetes Vormischaggregat, dessen Aggregatauslassöffnung bei einer radialen Reaktorraumzuflussöffnung angeordnet ist;
- Fig. 2: im durch das Vormischaggregat hindurch gelegten Längsschnitt den erfindungsgemässen, grossvolumigen Reaktor gemäss Fig. 1, wobei am Zylindermantel ein nach oben offenen Auslass für Brüden und ein nach unten wegführender Produktauslass aus dem Reaktorraum gezeigt sind;
- Fig. 3: im durch das Vormischaggregat hindurch gelegten Längsschnitt ein zweites Ausführungsbeispiels eines erfindungsgemässen, grossvolumigen Reaktors, dessen zylindrisches Gehäuse die Reaktorraumzuflussöffnung an einer seitlichen Stirnwand des Gehäuses aufweist und die Aggregatauslassöffnung des Vormischaggregats deckungsgleich zur Reaktorraumzuflussöffnung angeordnet ist;
- Fig. 4: im durch das Vormischaggregat hindurch gelegten Querschnitt einen erfindungsgemässen, zweiwelligen grossvolumigen Reaktor gemäss einem dritten Ausführungsbeispiel, welcher zwei zueinander parallel ausgerichtete und horizontal angeordnete Reaktorrotoren innerhalb des durch eine Zylindermantelfläche begrenzten Reaktorraums aufweist, und die Zylindermantelfläche eine oberhalb eines der beiden Reaktorrotoren angeordnete Reaktorraumzuflussöffnung aufweist, und die Aggregatauslassöffnung deckungsgleich zur Reaktorraumzuflussöffnung angeordnet ist;
- Fig. 5: im durch das Vormischaggregat hindurch gelegten Querschnitt einen erfindungsgemässen, zweiwelligen grossvolumigen Reaktor gemäss einem vierten Ausführungsbeispiel, welcher im Vergleich zum dritten Ausführungsbeispiel die Reaktorraumzuflussöffnung in einem seitlichen Bereich der Zylindermantelfläche aufweist, und die Aggregatauslassöffnung deckungsgleich zur Reaktorraumzuflussöffnung angeordnet ist;
- Fig. 6: im durch das Vormischaggregat hindurch gelegten Querschnitt einen erfindungsgemässen, zweiwelligen grossvolumigen Reaktor gemäss einem fünften Ausführungsbeispiel, wobei die Reaktorraumzuflussöffnung in einem oberen Bereich der Zylindermantelfläche und mittig bezüglich den beiden Reaktorrotoren angeordnet ist und die Aggregatauslassöffnung deckungsgleich zur Reaktorraumzuflussöffnung angeordnet ist;
- Fig. 7: im durch das Vormischaggregat hindurch gelegten Längsschnitt einen erfindungsgemässen Dünnschichtverdampfer mit einem in einem kreiszylinderförmigen Gehäuse angeordneten, um eine vertikale Drehachse angetriebenen Reaktorrotor, wobei das Gehäuse seitlich eine Reaktorraumzuflussöffnung aufweist, an welche ein Vormischaggregat mit dessen Aggregatauslassöffnung anliegt;
- Fig. 8: in Draufsicht den Dünnschichtverdampfer gemäss Fig. 7, wobei das Vormischaggregat geschnitten gezeigt ist;
- Fig. 9: einen Längsschnitt durch ein als Axialvormischaggregat ausgebildetes Vormischaggregat, welches alternativ zum in den Fig. 1 bis 8 gezeigten Vormischaggregat zur Anwendung gelangen kann;
- Fig. 10: in perspektivischer Darstellung eine erste weitere Ausführungsform eines Rotors, die anstelle der in Fig. 1 gezeigten Ausführungsform des Rotors verwendet werden kann;
- Fig. 11: in perspektivischer Darstellung eine erste weitere Ausführungsform eines Stators, die anstelle der in Fig. 1 gezeigten Ausführungsform des Stators verwendet werden kann;
- Fig. 12: in perspektivischer Darstellung den in Fig. 1 gezeigten Rotor, wobei insbesondere radiale Durchlässe durch einen radial innenliegenden Rotormantel und durch einen weiterer Rotormantel, der konzentrisch zum und radial ausserhalb des Rotormantels angeordnet ist, gezeigt sind;
- Fig. 13: in perspektivischer Darstellung den in Fig. 1 gezeigten Stator, wobei insbesondere radiale Durchlässe durch einen radial innenliegenden Statorteil und durch einen weiterer Statorteil, der konzentrisch zum und radial ausserhalb des Statorteils angeordnet ist, gezeigt sind;
- Fig. 14: in perspektivischer Darstellung eine zweite weitere Ausführungsform eines Rotors, die Anstelle der in Fig. 1 und 12 gezeigten Ausführungsform des Rotor verwendet werden kann; und
- Fig. 15: in perspektivischer Darstellung eine zweiten weitere Ausführungsform eines Stators, die anstelle der in Fig. 1 und 13 gezeigten Ausführungsform des Stator verwendet werden kann.

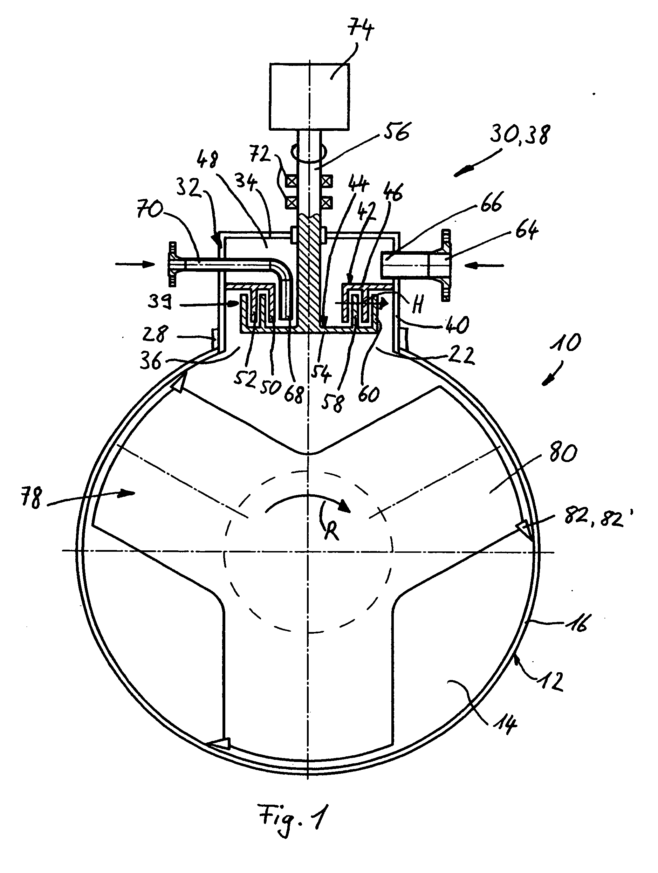

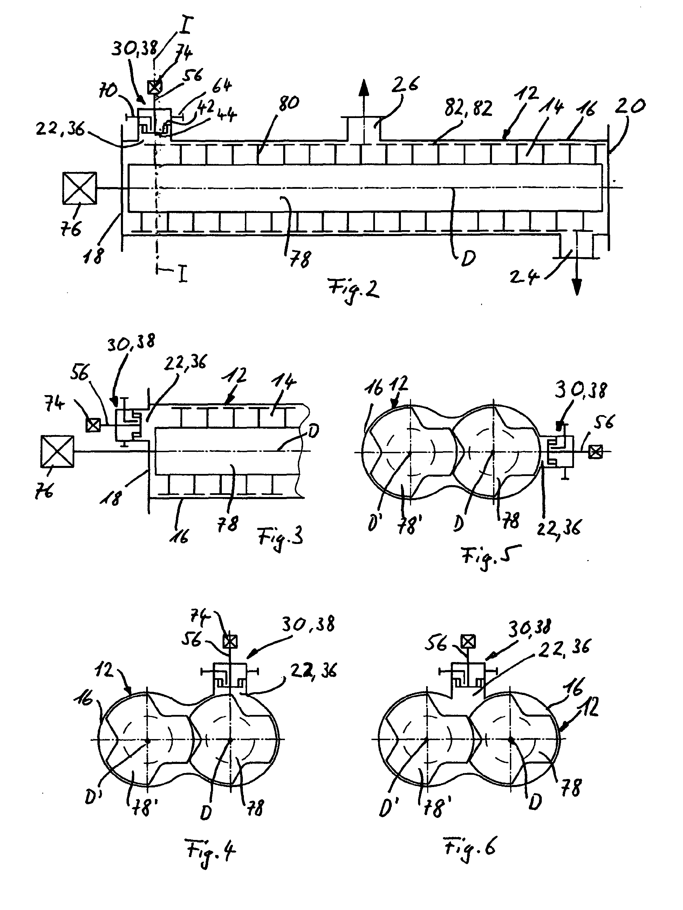

In den Fig. 1 und 2 ist ein erfindungsgemässer, grossvolumiger Reaktor 10 gemäss einem ersten Ausführungsbeispiel gezeigt. Dieser grossvolumige Reaktor 10 ist als Mischer beziehungsweise als Kneter ausgebildet.

Ein Gehäuse 12 des grossvolumigen Reaktors 10, welches einen Reaktorraum 14 begrenzt, ist durch einen kreiszylinderförmigen, horizontal ausgerichteten Mantel 16 ausgebildet, der beidseitig durch je eine Stirnwand 18, 20 verschlossen ist. Nahe der einen Stirnwand 18 weist der Mantel 16 eine, an der Oberseite des Mantels 16 angeordnete Reaktorraumzuflussöffnung auf. Nahe der anderen Stirnwand 20 weist der Mantel 16 an seiner Unterseite einen Produktauslass 24 auf. Weiter ist ein Auslass 26 für Brüden vorgesehen, der an der Oberseite des Mantels 16 und in etwa mittig zwischen den beiden Stirnwänden 18, 20 angeordnet ist.

Wie in Fig. 1 gezeigt, weist der Mantel 16 bei der Reaktorraumzuflussöffnung 22 einen Eingangsstutzen 28 auf, in welchen ein Vormischaggregat 30 eingesetzt ist.

Alternativ kann der Eingangsstutzen 28 auch mit einem Flansch versehen sein, wobei in diesem Fall das Vormischaggregat 30 auf den Flansch aufgesetzt wird.

Das als Radialvormischaggregat 38 ausgebildete Vormischaggregat 30 weist ein kreiszylinderförmiges Aggregatgehäuse 32 auf, welches einseitig, dem Reaktorraum 14 abgewandt, durch eine Aggregatgehäusestirnwand 34 verschlossen ist. Gegenüberliegend der Aggregatgehäusestirnwand 34 und dem Reaktorraum 14 zugewandt weist das Vormischaggregat 30 eine Aggregatauslassöffnung 36 auf.

Im Inneren des Aggregatgehäuses 32 ist ein Radialmischer 39 angeordnet, der durch einen mit einem Aggregatmantel 40 des Aggregatgehäuses 32 fest verbundenen Stator 42 und durch einen Rotor 44 ausgebildet ist. Zwischen dem Aggregatmantel 40 und dem Rotor 44 ist ein Spalt ausgebildet, durch welchen hindurch ein durch den Radialmischer 39 aufbereiteter Stoff dem Reaktorraum 14 zugeführt wird, wobei der aufbereitete Stoff nach dem Passieren des Spaltes keine weitere Verengung passierten muss, um in den Reaktorraum 14 zu gelangen.

Die Aggregatauslassöffnung 36 ist durch den lichten Querschnitt des Aggregatmantels 40 ausgebildet, grenzt einerseits unmittelbar an den Spalt und andererseits unmittelbar an den Reaktorraum an und liegt nahezu deckungsgleich zur Reaktorraumzuflussöffnung 22.

Der in Fig. 1, 2 und 13 gezeigte Stator 42 weist einen radial nach innen vom Aggregatmantel 40 abstehenden, ringscheibenförmigen Statorflansch 46 auf, der einen Innenraum des Aggregatgehäuses 32 in einen dem Reaktorraum 14 zugewandten Bereich und in einen dem Reaktorraum 14 abgewandten Vorraum 48 unterteilt. Weiter weist der Stator 42 einen am radial inneren Endbereich des Statorflansches 46 angeordneten, in Richtung des Reaktorraums 14 vom Statorflansch 46 abstehenden, kreiszylinderförmigen Statorteil 50 auf, welcher konzentrisch zum Aggregatmantel 40 liegt. Konzentrisch zu diesem Statorteil 50 ist am Statorflansch 46 ein weiterer Statorteil 52 angeordnet, dessen Durchmesser grösser ist als der Durchmesser des Statorteils 50.

Der in Fig. 1, 2 und 12 gezeigte Rotor 44 ist becherförmig ausgebildet, wobei eine Öffnung des becherförmigen Rotors 44 der Aggregatauslassöffnung 36 abgewandt ist. Der Rotor 44 weist einen Rotorboden 54 auf, welcher auf einer der Aggregatauslassöffnung 36 abgewandten Seite mit einer konzentrisch bezüglich des Statorteils 50 angeordneten Welle 56 drehfest verbunden ist. Diese endet in Richtung des Reaktorraums 14 beim Rotorboden 54.

Ein konzentrisch zur Welle 56 angeordneter Rotormantel 58 ist mit dem Rotorboden 54 fest verbunden und greift in einen Zwischenraum zwischen dem Statorteil 50 und dem weiteren Statorteil 52 ein. Ein ebenfalls konzentrisch zur Welle 56 angeordneter, weiterer Rotormantel 60 ist derart am Rotorboden 54 angeordnet, dass der weitere Statorteil 52 in einen Zwischenraum zwischen dem Rotormantel 58 und dem weiteren Rotormantel 60 eingreift.

Die Länge des Rotormantels 58, des weiteren Rotormantels 60, des Statorteils 50 und des weiteren Statorteils 52, in Richtung der Welle 56, ist im wesentlichen gleich gewählt. In Richtung der Welle 56 liegt das freie Ende des Rotormantels 58 nahezu an den Statorflansch 46 an, wodurch zwischen dem freien Ende des Rotormantels 58 und dem Statorflansch 46 ein schmaler Spalt ausgebildet ist. Folglich liegt das freie Ende des Statorteils 50 ebenfalls nahezu an den Rotorboden 54 an, wodurch zwischen dem freien Ende des Statorteils 50 und dem Rotorboden 54 ebenfalls ein schmaler Spalt ausgebildet ist. In radialer Richtung liegt der Statorteil 50 nahezu an den Rotormantel 58 an, der wiederum nahezu an den weiteren Statorteil 52 anliegt, der seinerseits nahezu an den weiteren Rotormantel 60 anliegt. Folglich ist zwischen dem Statorteil 50 und dem Rotormantel 58, zwischen dem Rotormantel 58 und dem weiteren Statorteil 52 und zwischen dem weiteren Statorteil 52 und dem weiteren Rotormantel 60 je ein schmaler, kreiszylinderförmiger Spalt ausgebildet.

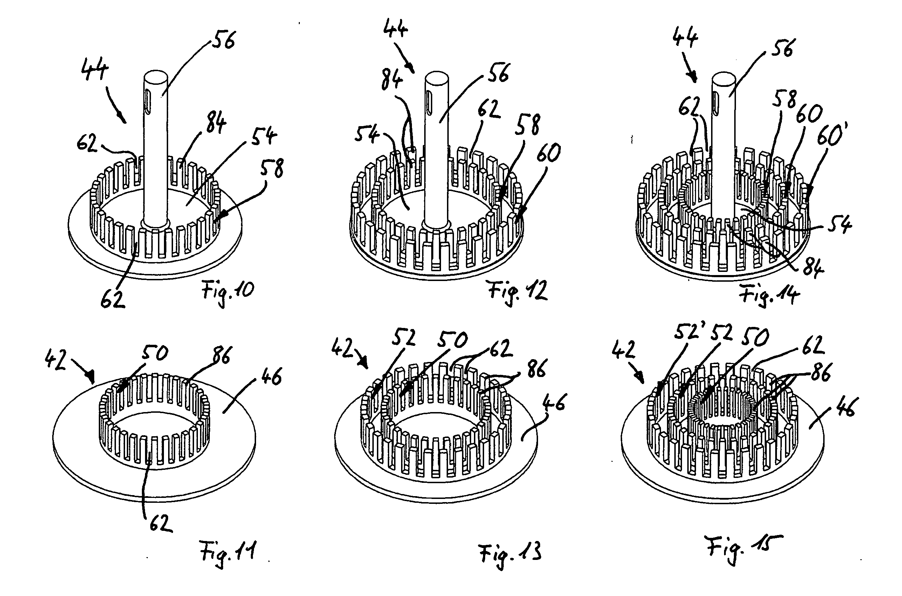

Der Rotormantel 58, der weitere Rotormantel 60, der Statorteil 50 und der weitere Statorteil 52 weisen radiale Durchlässe 62 auf, welche in Zusammenhang mit Fig. 12 und 13 näher erläutert sind.

Der Rotor 44 des Vormischaggregates 30 dreht bevorzugt im Vergleich zum Reaktorrotor 78 sehr hochtourig mit 10'000 bis 20'000 Umdrehungen pro Minute. Diese Anzahl Umdrehungen pro Minute entspricht einer Umfangsgeschwindigkeit des Rotors 44 von etwa 20 Metern pro Sekunde bis etwa 60 Metern pro Sekunde.

In den Vorraum 48 des Aggregatgehäuses 32 mündet seitlich, in radialer Richtung bezüglich der Welle 56 ausgerichtet, ein Produktzuflussstutzen 64, der dem Vorraume 48 zugewandt eine Produktzuflussöffnung 66 aufweist. Eine weitere Produktzuflussöffnung 68 ist an einem zwischen der Welle 56 und dem Statorteil 50 angeordneten Endbereich eines Stoffzuflussrohres 70 ausgebildet, welches durch das Aggregatgehäuse 32 und durch den Vorraum 48 hindurch führt und nahe dem Rotorboden 54 endet. Ein Innendurchmesser des Stoffzuflussrohres 70 ist kleiner gewählt als ein Innendurchmesser des Produktzuflussstutzens 64.

Die den Rotor 44 haltende Welle 56 ist durch die Aggregatgehäusestirnwand 34 dicht hindurch geführt. Ausserhalb des Aggregatgehäuses 32 ist die Welle 56 in einem Lager 72 gehalten und mittels eines Rotorantriebs 74 um die Achse der Welle 56 drehend angetrieben.

In Fig. 12 ist der Rotor 44 mit der daran angeordneten Welle 56 und in Fig. 13 der zum Rotor 44 gemäss Fig. 12 passende Stator 42 des Vormischaggregates 30 gemäss Fig. 1 gezeigt.

Wie Fig. 12 zeigt, ist der Rotormantel 58 durch eine Vielzahl auf einer konzentrisch zur Welle 56 ausgerichteter Kreiszylinderfläche liegend und zueinander in Umfangsrichtung der Kreiszylinderfläche regelmässig beabstandeter Rotorfinger 84 ausgebildet. Zwischen je zwei benachbarten Rotorfingern 84 ist ein spaltförmiger, radialer Durchlass 62 gebildet. Der weitere Rotormantel 60 ist analog zum Rotormantel 58 ebenfalls durch Rotorfinger 84 ausgebildet. Alle Rotorfinger 84 weisen dieselbe Länge auf. Die Anzahl der Rotorfinger 84 des Rotormantels 58 ist gleich der Anzahl der Rotorfinger 84 des weiteren Rotormantels 60. In Umfangsrichtung der Kreiszylinderfläche sind die Rotorfinger 84 des Rotormantels 58 und eine halbe Teilung gegenüber den Rotorfinger 84 des weiteren Rotormantels 60 versetzt.

Der Statorteil 50 des in Fig. 13 gezeigten Stators 42 ist durch eine Vielzahl von Statorfingern 86 ausgebildet, die auf einer konzentrisch zur Welle 56 liegenden Kreiszylinderfläche, in zueinander in Umfangsrichtung regelmässigen Abständen angeordnet sind. Der weitere Statorteil 52 ist analog zum Statorteil 50 ausgebildet, jedoch weist die Zylindermantelfläche, auf welcher dessen Statorfinger 86 liegen, einen grösseren Durchmesser auf. Die Anzahl der Statorfinger 86 des Statorteils 50 ist gleich der Anzahl der Statorfinger 86 des weiteren Statorteils 52. In Umfangsrichtung der Kreiszylinderfläche sind die Statorfinger 86 des Statorteils 50 und eine halbe Teilung gegenüber den Statorfingern 86 des weiteren Statorteils 52 versetzt. Zwischen je zwei benachbarten Statorfingern 86 ist ein spaltförmiger, radialer Durchlass 62 gebildet.

Innerhalb des den Reaktorraum 14 begrenzenden Gehäuses 12 ist ein um seine Drehachse D mittels eines Reaktorrotorantriebs 76 in Rotationsrichtung R angetriebener Reaktorrotor 78 angeordnet. Am Reaktorrotor 78 ist eine Vielzahl von in radialer Richtung vom Reaktorrotor 78 abstehenden, dreiarmigen Segmentscheiben 80 angeordnet (siehe Fig. 2). An jedem Arm der Segmentscheibe 80 ist am radial äusseren und in Rotationsrichtung R vorlaufenden Endbereich des Armes ein Knetbalken 82 beziehungsweise ein Mischbalken 82' angeordnet (siehe Fig. 1), der zumindest annähernd parallel, in Richtung der Drehachse D des Reaktorrotors 78 ausgerichtet ist.

Die relative Anordnung des Reaktorrotors 78 bezüglich des Rotors 44 des Vormischaggregates 30 ist derart, dass die Segmentscheiben 80 und Knetbalken 82 beziehungsweise Mischbalken 82' am Rotor 44 berührungslos vorbeilaufen.

In einer weiteren Ausführungsform des Gehäuses 12 greifen in den zwischen zwei zueinander benachbarten Segmentscheiben 80 ausgebildeten Zwischenraum Mischarme (nicht gezeigt) ein, welche am Mantel 16 des Gehäuses 12 angeordnete sind. Vorzugsweise werden jeweils drei Mischarme pro Zwischenraum angeordnet, die in einer Ebene rechtwinklig zur Drehachse D liegen und in Umfangsrichtung des Mantels 16 in regelmässigen Abständen zueinander angeordnet sind.

In den Fig. 10 und 11 ist eine erste weitere Ausführungsform des Rotors 44 und des Stators 42 dargestellt, wobei beim Rotor 44 auf den weiteren Rotormantel 60 und beim Stator 42 auf den weiteren Statorteil 52 verzichtet wurde im Vergleich zu dem in Fig. 12 gezeigten Rotor 44 beziehungsweise zu dem in Fig. 13 gezeigten Stator 42. Folglich weist der Stator 42 lediglich einen Kranz Statorfinger 86 und der Rotor 42 lediglich einen Kranz Rotorfinger 84 auf.

In den Fig. 14 und 15 ist eine zweite, weitere Ausführungsform des Rotors 44 und des Stators 42 dargestellt, wobei der Rotor 44 gleich wie der in Fig. 12 dargestellte Rotor 44 am Rotorboden 54 den Rotormantel 58 und den weiteren Rotormantel 60 aufweisen. Zusätzlich weist der Rotor 44 der zweiten, weiteren Ausführungsform einen zweiten weiteren Rotormantel 60' auf, der analog zum Rotormantel 58 aufgebaut ist, konzentrisch zum Rotormantel 58 und radial ausserhalb des weitern Rotormantels 60 am Rotorboden 54 angeordnet ist. Der radiale Abstand zwischen dem Rotormantel 58 und dem weiteren Rotormantel 60 ist gleich dem radialen Abstand zwischen dem weiteren Rotormantel 60 und dem zweiten weiteren Rotormantel 60' gewählt. Die Rotorfinger 84 des zweiten weiteren Rotormantels 60' sind gegenüber den Rotorfinger 84 des weiteren Rotormantels 60 in Umfangsrichtung um eine halbe Teilung versetzt.

Entsprechend zum Rotor 44 weist der Stator 42 gleich wie der in Fig. 13 gezeigte Stator 42, den am Statorflansch 46 angeordneten Statorteil 50 und den weiteren Statorteil 52 auf. Zusätzlich weist der Stator 42 der zweiten weiteren Ausführungsform einen zweiten weiteren Statorteil 52' auf, der konzentrisch zum Statorteil 50 und radial ausserhalb des weiteren Statorteils 52 am Statorflansch 46 angeordnet ist. Der radiale Abstand zwischen dem Statorteil 50 und dem weiteren Statorteil 52 ist gleich dem radialen Abstand zwischen dem weiteren Statorteil 52 und dem zweiten weiteren Statorteil 52' gewählt. Die Statorfinger 86 des zweiten weiteren Statorteils 52' sind gegenüber den Statorfingern 86 des weiteren Statorteils 52 in Umfangsrichtung um eine halbe Teilung versetzt.

Folglich weist der Stator 42 der zweiten weitern Ausführungsform drei Kränze Statorfinger 86 und der Rotor 44 der zweiten weiteren Ausführungsform drei Kränze Rotorfinger 84 auf.

In Fig. 3, 4, 5 und 6 sind weitere Ausführungsform des als Kneter beziehungsweise Mischer ausgebildeten, erfindungsgemässen grossvolumigen Reaktors 10 gezeigt, wobei lediglich auf Unterschiede eingegangen wird. Für entsprechende Elemente werden in allen Ausführungsbeispielen dieselben Bezugszeichen verwendet.

Fig. 3 zeigt einen erfindungsgemässe, einwellige grossvolumige Reaktor 10 gemäss einem zweiten Ausführungsbeispiel. Ein einwelliger, grossvolumige Reaktor ist beispielsweise aus EP-A-1 417 998 oder EP-A-0 274 668 bekannt.

Der in Fig. 3 gezeigte grossvolumige Reaktor 10 weist das Vormischaggregat 30 stirnseitig am Gehäuse 12 angeordnet auf. Die Reaktorraumzuflussöffnung 22 ist im oberen Bereich der Stirnwand 22 angebracht, welche entfernt zum Produktauslass 24 aus dem Reaktorraum 14 liegt. Das Vormischaggregat 30 ist derart am Gehäuse 12 angeordnet, dass die Ausrichtung der Welle 56 des Vormischaggregats 30 parallel zur Ausrichtung der Drehachse D des Reaktorrotors 78 und die Aggregatauslassöffnung 34 bei der Reaktorraumzuflussöffnung 22 und zumindest annähernd deckungsgleich angeordnet ist.

Der in Fig. 4 gezeigte erfindungsgemässe grossvolumige Reaktor 10 gemäss einem dritten Ausführungsbeispiel weist im Reaktorraum 14 zwei parallel zueinander und horizontal ausgerichtete Reaktorrotoren 78, 78' auf. Solche grossvolumige Reaktoren sind beispielsweise aus der älteren Europäischen Patentanmeldung mit der Anmeldenummer EP 05008591 und aus EP-A-1 101 525 bekannt. Die Umlaufrichtung und Umlaufgeschwindigkeit jedes Reaktorrotors 78, 78' ist nahezu frei wählbar, insbesondere kann die Umlaufrichtung des einen Reaktorrotors 78 gleich oder entgegengesetzt zur Umlaufrichtung des anderen Reaktorrotors 78' sein. Das Gehäuse 12 weist wiederum einen zylinderförmigen Mantel 16 auf, jedoch weist die Grundfläche dieses Zylinders angenähert den Umrisse einer liegenden 8 auf. Das Gehäuse 12 ist wiederum beidseitig durch eine Stirnwand verschlossen.

Die Reaktorraumzuflussöffnung 22 ist in einem oberen Bereich des Mantels 16, direkt oberhalb der Drehachse D des einen Reaktorrotors 78 angeordnet. Das Vormischaggregat 30 ist derart am Gehäuse 12 angeordnet, dass die Ausrichtung der Welle 56 des Vormischaggregats 30 vertikal und die Aggregatauslassöffnung 36 bei der Reaktorraumzuflussöffnung 22 und zumindest annähernd deckungsgleich angeordnet ist.

Fig. 5 zeigt einen erfindungsgemässe, zweiwelligen, grossvolumige Reaktor 10 gemäss einem vierten Ausführungsbeispiel. Dieser weist im Vergleich zum dritten Ausführungsbeispiel (siehe Fig. 4) die Reaktorraumzuflussöffnung 22 in einem seitlichen Bereich des Mantels 16, auf der Höhe der Drehachsen D, D' auf. Das Vormischaggregat 30 ist derart am Gehäuse 12 angeordnet, dass die Ausrichtung der Welle 56 des Vormischaggregats 30 horizontal und die Aggregatauslassöffnung 36 bei der Reaktorraumzuflussöffnung 22 und zumindest annähernd deckungsgleich angeordnet ist.

Fig. 6 zeigt einen erfindungsgemässe, zweiwelligen, grossvolumige Reaktor 10 gemäss einem fünften Ausführungsbeispiel. Dieser ist weitgehend gleich dem dritten Ausführungsbeispiel (siehe Fig. 4) ausgebildet und weist die Reaktorraumzuflussöffnung 22 ebenfalls in einem oberen Bereich des Mantels 16 auf. Die Reaktorraumzuflussöffnung 22 ist jedoch mittig zwischen den beiden Drehachsen D, D' der Reaktorrotoren 78, 78' angeordnet. Das Vormischaggregat 30 ist derart am Gehäuse 12 angeordnet, dass die Ausrichtung der Welle 56 des Vormischaggregats 30 vertikal und die Aggregatauslassöffnung 36 bei der Reaktorraumzuflussöffnung 22 und zumindest annähernd deckungsgleich angeordnet ist.

In einer weitern Ausführungsform ist das Vormischaggregat 30, ähnlich wie in Fig. 5, seitlich angeordnet, jedoch oberhalb oder unterhalb der Drehachsen D, D' der Reaktorrotoren 78, 78'. Die Ausrichtung der Welle 56 des Vormischaggregats 30 kann dabei horizontal oder zumindest annähernd in radialer Ausrichtung bezüglich der näherliegenden Drehachse D sein.

Nachfolgend ist beschrieben, wie zwei Ausgangsstoffe dem grossvolumigen Reaktor gemäss dem ersten bis fünften Ausführungsbeispiel (siehe Fig. 1 bis 6) zugeführt werden.

Durch den Produktzuflussstutzen 64 mit der Produktzuflussöffnung 66 wird der Ausgangsstoff in den Vorraum 48 des Vormischaggregates 30 zugeführt. Durch kontinuierliches zufördern durch den Produktzuflussstutzen 64 wird der Ausgangsstoff zum Radialmischer 39 gefördert und durch diesen hindurchgepresst. Weiter wird durch das Stoffzuflussrohr 70, das die weitere Produktzuflussöffnung 68 aufweist, ein weiterer Ausgangsstoff, ebenfalls kontinuierlich dem Vormischaggregat 30 zugeführt, wobei vorzugsweise durch den Produktzuflussstutzen 64 eine volumenmässig beziehungsweise mengenmässig grössere Menge des Ausgangsstoffs dem grossvolumigen Reaktor 10 zugeführt wird als vom durch das Stoffzuflussrohr 70 zugeführten weiteren Ausgangsstoff. Durch den mit dem Stator 42 zusammenwirkenden Rotor 44 wird der Ausgangsstoff sofort mit dem weiteren Ausgangsstoff zu einem aufbereiteten Stoff innig vorgemischt und gleichzeitig in Hauptförderrichtung H durch den Radialmischer 39 hindurch gefördert. Die Förderung des Ausgangsstoffs, des weiteren Ausgangsstoffs beziehungsweise des aufbereiteten Stoffs ist dabei durch die auf diese wirkende Zentrifugalkraft unterstützt. Der aufbereitete Stoff wird darauffolgend sofort durch die Aggregatauslassöffnung 36 und die zumindest nahezu deckungsgleich angeordnete Reaktorraumzuflussöffnung 22 aus dem Vormischaggregat 30 in den Reaktorraum 14 zur Weiterverarbeitung gefördert.

Beispielsweise enthält der Ausgangsstoff ein Monomer, in welches im Vormischaggregat 30 der weitere Ausgangsstoff, ein Katalysator, mittels des Radialmischers 39 ideal eingemischt beziehungsweise fein und gleichmässig dispergiert wird und dadurch der aufbereitete Stoff entsteht. Durch das Mischen startet eine meist heftige Reaktion, bei welcher das Monomer rasch zu einem Polymer reagiert. Dabei bildet sich beispielsweise eine gelartige oder eine feste Phase. Der aufbereitete Stoff wird sofort dem Reaktorraum 14 zugeführt, ohne dass dieser eine Verengung passieren muss.

Durch eine kurze Verweilzeit des aufbereiteten Stoffs im Vormischaggregat 30 ist verhindert, dass der aufbereitete Stoff des Vormischaggregats 30 verstopft. Die bei der obigen Reaktion abzuführende beziehungsweise zuzuführende Reaktionswärme kann wirkungsvoll durch das Gehäuse 12 abgeführt beziehungsweise zugeführt werden.

Durch ein hochtourig arbeitenden Rotor 44 ist weiter eine Formbildung des aufbereiteten Stoffs günstig beeinflusst. Falls bei der Reaktion der Ausgangsstoffe ein fester Stoff entsteht, erhält dieser dank dem hochtourig rotierenden Rotor 44 eine granuläre Form. Diese granuläre Form kann weiter durch einen mit Schneiden versehenen Rotor verändert werden.

Die granuläre Form wird bei der weiteren Reaktion des aufbereiteten Stoffs im Reaktorraum 14 im wesentlichen beibehalten. Dank der Erzeugung der granulären Form ist eine Entstehung grosser Agglomerate verhindert.

Alternativ können anstelle eines einzigen Produktzuflussstutzens 64 auch mehrere Produktzuflussstutzen und/oder anstelle des einen Stoffzuflussrohrs auch mehrere Stoffzuflussrohre am Vormischaggregat 30 angeordnet sein.

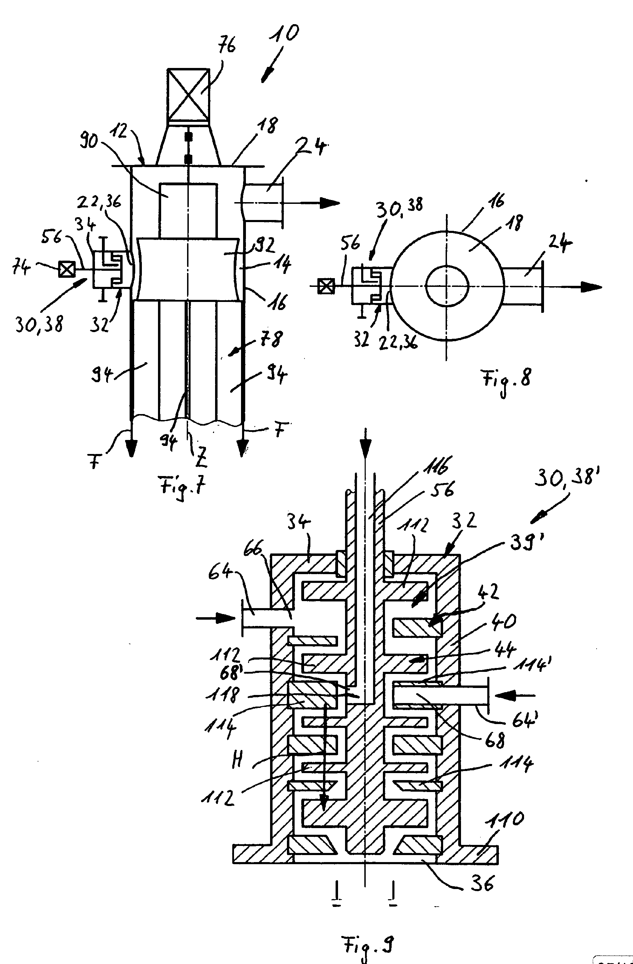

Fig. 7 und 8 zeigen einen erfindungsgemässen Dünnschichtverdampfer 10'. Dünnschichtverdampfer sind beispielsweise aus EP-A-1 417 998 und DD-A-226 778 bekannt.

Der vorliegende Dünnschichtverdampfer 10' weist dasselbe Vormischaggregat 30 auf wie der grossvolumige Reaktor 10 gemäss dem ersten Ausführungsbeispiel.

Das einen Reaktorraum 14 begrenzende Gehäuse 12 ist aus einem kreiszylindrischen Mantel 16 ausgebildet, dessen Zylinderachse Z vertikal ausgerichtet ist. Das Gehäuse 12 ist oben durch eine Stirnwand 20 verschlossen. Gegen unten ist der Reaktorraum 10 durch eine weitere Stirnfläche (nicht gezeigt) begrenzt, welche eine zentralen Produktauslass (nicht gezeigt) aufweist. Der Mantel 16 weist seitlich und nahe der oberen Stirnwand 20 einen Auslass 26 für Brüden auf. Unterhalb des Auslasses 26 für Brüden und diametral diesem gegenüberliegend weist der Mantel 16 eine Reaktorraumzuflussöffnung 22 auf. Bei der Reaktorraumzuflussöffnung 22 ist das Vormischaggregat 30 derart am Gehäuse angeordnet, dass die Ausrichtung der Welle 56 des Vormischaggregats 30 rechtwinklig zur Zylinderachse Z und die Aggregatauslassöffnung 36 bei der Reaktorraumzuflussöffnung 22 und zumindest annähernd deckungsgleich angeordnet ist.

Im Reaktorraum 14 ist ein um die Zylinderachse Z rotierender Reaktorrotor 78 angeordnet, dessen Reaktorrotorwelle 90 mittels eines oberhalb des Gehäuses 12 angeordneten Reaktorrotorantriebs 76 angetrieben ist. Der Reaktorrotor 78 weist einen Produktverteilring 92 mit einer konkaven Oberfläche auf. Dieser Produktverteilring 92 umgreift die Reaktorrotorwelle 90, ist in Richtung der Zylinderachse Z auf der Höhe der Reaktorraumzuflussöffnung 22 angeordnet und dient dazu, den dem Reaktorraum 14 durch die Reaktorraumzuflussöffnung 22 zugeführten aufbereiteten Stoff in Umfangsrichtung gleichmässig zu verteilen. Der Reaktorrotor 78 weist direkt unterhalb des Produktverteilrings 92 vier Flügel 94 auf, die rechteckig und eben ausgebildet sind. Die kürzeren Rechteckseiten steht in radialer Richtung vom Rotor 78 ab und die längeren Rechtecksseiten verlaufen parallel zur Zylinderachse Z. Die radial von der Zylinderachse Z entfernte, längere Rechtecksseite liegt zumindest annähernd an die innere Oberfläche des Mantels 16 an. Die Flügel 94 dienen dazu, den aufbereiteten Stoff auf der inneren Oberfläche des Mantels 16 zu verteilen.

Der Dünnschichtverdampfer 10' arbeitet wie folgt.

Der Ausgangsstoff und der weitere Ausgangsstoff wird, wie im Zusammenhang mit Fig. 1 und 2 beschrieben, im Vormischaggregat 30 zu einem aufbereiteten Stoff gemischt. Der aufbereitete Stoff wird durch die bei der Reaktorraumzuflussöffnung 22 angeordnete Aggregatauslassöffnung 36 in den Reaktorraum 14 eingeführt. Durch den Produktverteilring 92 wird der aufbereitete Stoff in Umfangsrichtung des Mantels 16 gleichmässig an diesem verteilt und durch die Schwerkraft nach unten, in Flussrichtung F transportiert. Die bei den oben beschriebenen Prozessen entstehenden Brüden werden durch den Auslass 26 für Brüden aus dem Reaktorraum 14 abgeführt. Durch den drehenden Reaktorrotor 78 wie auch durch die Schwerkraft wird der aufbereitete Stoff entlang der innenliegenden Fläche des Mantels 16 in Flussrichtung F zu dem Produktauslass 24 (siehe Fig. 8) gefördert und dabei immer wieder von neuem durch die Flügel 94 auf die innere Oberfläche des Mantels 16 aufgetragen.

In einer weiteren Ausführungsformen ist der Dünnschichtverdampfer nicht wie oben beschrieben vertikal - das heisst mit vertikal ausgerichteter Zylinderachse Z - sonder horizontal ausgerichtet.

In einer weiteren Ausführungsform kann die Ausrichtung des Dünnschichtverdampfers beliebig sein, das heisst, dass die Zylinderachse Z in einem beliebigen Winkel zur Vertikalen steht.

In Fig. 9 ist ein als Axialvormischaggregat 38' ausgebildetes Vormischaggregat 30 gezeigt, welches anstelle des in den obigen Ausführungsbeispielen beschriebenen, als Radialvormischaggregat 38 ausgebildeten Vormischaggregats 30 angewandt werden kann.

Das Vormischaggregat 30 weist ein Aggregatgehäuse 32 mit einem kreiszylindrischen Aggregatmantel 40 auf, welcher einseitig durch eine Aggregatgehäusestirnwand 34 verschlossen ist. Gegenüberliegend der Aggregatgehäusestirnwand 34 weist das Aggregatgehäuse 32 eine Aggregatauslassöffnung 36 und radial aussen einen Flansch 110 auf. Der lichte Durchmesser der Aggregatauslassöffnung 36 ist gleich dem lichten Durchmesser des Aggregatgehäuses 32. Nahe der Aggregatgehäusestirnwand 34 ist ein durch den Aggregatmantel 40 hindurch geführter Produktzuflussstutzen 64 angeordnet, der einer Produktzuflussöffnung 66 bildet.

Im Inneren des Aggregatgehäuses 32 ist ein Rotor 44 angeordnet, der eine Welle 56 und mehrere davon radial abstehende Mischarme 112 aufweist, welche mit am Stator 42 angeordneten Mischbalken 114 zum Vermischen beziehungsweise zum Rühren zusammen wirken. Jeweils mehrere, beispielsweise drei, Mischarme 112 sind in einer rechtwinklig zur Welle 56 ausgerichteten Ebene und in Umfangsrichtung in regelmässigen Abständen zueinander angeordnet. Mehrer Mischbalken 114, beispielsweise drei, sind ebenfalls in Ebenen rechtwinklig zur Welle 56 angeordnet. Auf eine Ebene mit Mischbalken 114 folgt jeweils in Richtung der Welle 56 eine Ebene mit Mischarmen 112. Fig. 9 zeigt fünf Ebenen mit Mischbalken 114 und fünf Ebenen mit Mischarmen 112.

Die Mischarme 112 wie auch die Mischbalken 114 weisen in Richtung der Welle 56 unterschiedliche Dicken auf. Weiter sind die Mischarme 112 und Mischbalken 114 derart ausgeformt, dass ein in das Vormischaggregat eingeführter Ausgangsstoff in Hauptförderrichtung H gefördert wird, die im wesentlichen parallel zur Welle 56 verläuft und von der Produktzuflussöffnung 66 zur Aggregatauslassöffnung 36 gerichtet ist. Der Rotor 44 bildet zusammen mit dem Stator 42 den Axialmischer 39'.

In etwa mittig zwischen der Produktzuflussöffnung 66 und der Aggregatauslassöffnung 36 weist das Vormischaggregat 30 eine weitere Produktzuflussöffnung 68 auf. Hierzu ist in radialer Richtung zur Welle 56 durch einen der Mischbalken 114' und durch den daran anschliessenden Aggregatmantel 40 ein Stoffzuflussrohr hindurch geführt, das radial aussen einen Produktzuflussstutzen 64' und radial innen die weitere Produktzuflussöffnung 68 aufweist.

Weiter weist die Welle 56 einen in axialer Richtung der Welle 56 verlaufenden Produktzuflusskanal 116 auf, dessen dem Reaktorraum 14 abgewandtes Ende offen ist. Das dem Reaktorraum 14 zugewandte Ende des Produktzuflusskanals 116 ist in Richtung der Welle 56 verschlossen und in radialer Richtung führt ein radialer Produktauslass 118 vom Produktzuflusskanal 116 in einen Innenraum des Vormischaggregats 30, wobei dieser radiale Produktauslass 118 in etwa mittig zwischen der Produktzuflussöffnung 66 und der Aggregatauslassöffnung 36 in den Innenraum mündet und als eine zentrale Produktzuflussöffnung 68' dient.

Der Rotor 44 dreht bevorzugt im Vergleich zum Reaktorrotor 78 sehr hochtourig, beispielsweise mit etwa 5'000 Umdrehungen pro Minute.

Nachfolgend ist die Arbeitsweise des als Axialvormischaggregat 38' ausgebildeten Vormischaggregat 30 beschrieben.

Durch den Produktzuflussstutzen 64 mit der Produktzuflussöffnung 66 wird der Ausgangsstoff in das Axialvormischaggregat 38' nahe der Aggregatgehäusestirnwand 34 in den Innenraum des Vormischaggregates 30 eingeführt. Durch kontinuierliche Zufördern und durch die Rotation der Welle 56 mit den daran angeordneten Mischarmen 112 wird der Ausgangsstoff in Hauptförderrichtung H weitertransportiert.

Zwischen dem Produktzuflussstutzen 64 mit Produktzuflussöffnung 66 und dem weiteren Produktzuflussstutzen 64' mit der weiteren Produktzuflussöffnung 68 beziehungsweise dem radialen Produktauslass 118 wird der durch die Produktzuflussöffnung 66 zugeführte Ausgangsstoff vorgerührt. Durch Zuführen eines weiteren Ausgangsstoffes oder mehreren Ausgangsstoffen durch die weitere Produktzuflussöffnung 68 und/oder durch den radialen Produktauslass 118 werden die Ausgangsstoffe, welche durch die Produktzuflussöffnung 66, durch die weitere Produktzuflussöffnung 68 und durch den radialen Produktauslass 118 dem Vormischaggregat 30 zugeführt werden, miteinander vermischt. Der dadurch entstehende aufbereitete Stoff wird durch die Aggregatauslassöffnung 36 aus dem Vormischaggregat 30 abgegeben und unmittelbar durch die Reaktorraumzuflussöffnung 22 dem Reaktorraum 14 (siehe Fig. 1 bis 8) zugeführt.

Bei einer weiteren Ausführungsform eines als Axialvormischaggregat ausgebildeten Vormischaggregates kann die Anzahl der Produktzuflussöffnungen 66 beziehungsweise der weiteren Produktzuflussöffnungen 68 unterschiedlich zu dem in Fig. 9 gezeigten Ausführungsbeispiel sein. Die zentrale Produktzuflussöffnung 68' kann selbstverständlich auch weggelassen werden.

Bei einer weiteren Ausführungsform des Radialvormischaggregates 38 kann der Produktzuflusskanal 116 mit dem radialen Produktauslass 118 des in Fig. 9 offenbarten Axialvormischaggregats 38' ebenso in die Welle 56 des Radialvormischaggregats 38 integriert werden.

Es ist auch möglich, einen statischen Mischer als Vormischaggregat zu verwenden. Über eine Produktzuflussöffnung wird dem statischen Mischer ein erster Ausgangsstoff zugeführt, welcher innerhalb einer Mischzone mit mindestens einem weiteren, über mindestens eine weitere Produktzuflussöffnung zugeführten Ausgangsstoff zu einem aufbereiteten Stoff vermischt wird. Direkt anschliessend an die Mischzone wird dieser durch eine Aggregatauslassöffnung hindurch unmittelbar dem Reaktorraum 14 des grossvolumigen Reaktors 10 (siehe Fig. 1 bis 6) oder des Dünnschichtverdampfers 10' (siehe Fig. 7 und 8) zugeführt. Selbstverständlich können verschiedene Ausgangsstoffe auch durch dieselbe Produktzuflussöffnung dem Vormischaggregat zugeführt werden.

Ein weiterer Vorteil des erfindungsgemässen grossvolumigen Reaktors beziehungsweise des erfindungsgemässen Dünnschichtverdampfers ist die Möglichkeit, diesen direkt im Durchlaufbetrieb anzufahren, das heisst, dass beim Anfahren kein Batch-Betrieb, wie dies bei herkömmlichen grossvolumigen Reaktoren notwendig sein kann, vor einem Übergang zum Durchlaufbetrieb durchlaufen werden muss.

Weitere Anwendungsgebiete des erfindungsgemässen grossvolumigen Reaktors und des erfindungsgemässen Dünnschichtverdampfers liegen auf dem Gebiet des Compoundierens von Polymerschmelzen und bei Entgasungsprozessen, bei denen unter Prozessbedingungen nicht flüchtige Additive zugegeben werden. Ein weiteres Anwendungsgebiet ist im Bereich der Lebensmittelindustrie denkbar.

## Patentansprüche

1. Grossvolumiger Reaktor mit einem einen Reaktorraum (14) umschliessenden Gehäuse (12), einem im Reaktorraum (14) angeordneten Reaktorrotor (78, 78'), einer in den Reaktorraum (14) hineinführenden Reaktorraumzuflussöffnung (22), einem vom Reaktorraum (14) wegführenden Produktauslass (24), und einem einen Stator (42) sowie einen mit diesem zusammen wirkenden, auf einer angetriebenen Welle (56) sitzenden Rotor (44) zum Vermischen eines über eine Produktzuflussöffnung (66) zugeführten Ausgangsstoffes aufweisenden Vormischaggregat (30), dessen Aggregatauslassöffnung (36) bei der Reaktorraumzuflussöffnung (22) angeordnet ist, **dadurch gekennzeichnet, dass** das Vormischaggregat (30) als Radialvormischaggregat (38) ausgebildet ist, dessen Hauptförderrichtung (H) während des Vermischens des Ausgangsstoffs - bezüglich der Drehachse des Rotors (44) - in radialer Richtung nach aussen verläuft, der Rotor (44) becherförmig ausgebildet ist, ein Rotorboden (54) dem Reaktorraum (14) zugewandt ist und auf der Welle (56) sitzt, ein mit dem Rotorboden (54) fest verbundener, zu einem als Hohlzylinder ausgebildeten Statorteil (50) des Stators (42) konzentrisch angeordneter Rotormantel (58) wie auch der Statorteil (50) radiale Durchlässe (62) aufweisen, und der Statorteil (50) bezüglich des Rotormantels (58) radial innenliegend ist und an einem radial nach aussen vom Statorteil (50) wegstehen den Statorflansch (46) gehalten ist, der den Rotor (44) überdeckt.

2. Grossvolumiger Reaktor gemäss Anspruch 1, **dadurch gekennzeichnet, dass** er als Kneter oder als Mischer ausgebildet ist.

3. Grossvolumiger Reaktor gemäss Anspruch 1 oder 2, **dadurch gekennzeichnet, dass** das Gehäuse (12) bei der Reaktorraumzuflussöffnung (22) einen Eingangsstutzen (28) aufweist, und das Vormischaggregat (30) auf den Eingangsstutzen (28) aufgesetzt oder in den Eingangsstutzen (28) eingesetzt ist.

4. Grossvolumiger Reaktor gemäss einem der Ansprüche 1 bis 3, **dadurch gekennzeichnet, dass** der Stator (42) einen zum Statorteil (50) konzentrisch angeordneten und im Durchmesser grösseren weiteren Statorteil (52, 52') aufweist, der Rotormantel (54) des Rotors (44) zwischen dem Statorteil (50) und dem weiteren Statorteil (52, 52') angeordnet ist, der Rotor (44) einen zum Rotormantel (58) konzentrischen und im Durchmesser grösseren weiteren Rotormantel (60, 60') aufweist, und der weiteren Statorteil (52, 52') zwischen dem Rotormantel (58) und dem weiteren Rotormantel (58, 58') angeordnet ist.

5. Grossvolumiger Reaktor gemäss einem dem Anspruche 1 bis 4, **dadurch gekennzeichnet, dass** der Statorflansch (46), im Inneren des Vormischaggregates (30), einen auf der dem Reaktorraum (14) abgewandten Seite des Statorflansches (46) gelegenen Vorraum (48) begrenzt und in diesen Vorraum (48) die Produktzuflussöffnung (66) mündet.

6. Grossvolumiger Reaktor gemäss Anspruch 5 **dadurch gekennzeichnet, dass** das Vormischaggregat (30) ein durch den Vorraum (48) hindurch führendes Stoffzuflussrohr (70) aufweist, dessen Ende radial innerhalb des Rotormantels (58) und des Statorteils (50) endet und eine weitere Produktzuflussöffnung (68) aufweist.

7. Grossvolumiger Reaktor gemäss einem der Ansprüche 1 bis 6, **dadurch gekennzeichnet, dass** die Welle (56) einen in Axialrichtung verlaufenden Produktzuflusskanal (116) aufweist, von welchem ein radialer Produktauslass (118) wegführt, welcher als zentrale Produktzuflussöffnung (68') dient.

8. Verwendung eines grossvolumigen Reaktors gemäss einem des Ansprüche 1 bis 7 als Dünnschichtverdampfer.

## Claims

1. Large-volume reactor comprising a housing (12) enclosing a reactor chamber (14), a reactor rotor (78, 78') disposed in the reactor chamber (14), a reactor-chamber inlet opening (22) leading into the reactor chamber (14), a product outlet (24) leading away from the reactor chamber (14), and a premixing unit (30) comprising a stator (42) and a rotor (44) sitting on a driven shaft (56) and cooperating therewith for mixing a starting material supplied via a product inlet opening (66), the unit outlet opening (36) of the premixing unit (30) is located at the reactor-chamber inlet opening (22), **characterized in that** the premixing unit (30) is embodied as a radial premixing unit (38) whose principal conveying direction (H) runs radially outward with respect to the axis of rotation of the rotor (44) during the mixing of the starting material, the rotor (44) is embodied as cup-shaped, a rotor base (54) faces the reactor chamber (14) and sits on the shaft (56), a rotor casing (58) which is fixedly connected to the rotor base (54) and is arranged concentrically to a stator part (50) of the stator (42) embodied as a hollow cylinder, and also the stator part (50) have radial openings (62), and the stator part (50) lies radially inward in relation to the rotor casing (58) and is held on a stator flange (46) located radially outward away from the stator part (50), said flange covering the rotor (44).

2. Large-volume reactor according to Claim 1, **characterized in that** it is embodied as a kneader or as a mixer.

3. Large-volume reactor according to Claim 1 or 2, **characterized in that** the housing (12) has an inlet connection (28) at the reactor-chamber inlet opening (22) and the premixing unit (30) is placed on the inlet connection (28) or inserted in the inlet connection (28).

4. Large-volume reactor according to one of Claims 1 to 3, **characterized in that** the stator (42) comprises a further stator part (52, 52') arranged concentrically to the stator part (50) and having a larger diameter and the rotor casing (54) of the rotor (44) is arranged between the stator part (50) and the further stator part (52, 52'), the rotor (44) comprises a further rotor casing (60, 60') concentric to the rotor casing (58) and having a larger diameter, and the further stator part (52, 52') is arranged between the rotor casing (58) and the further rotor casing (58, 58').

5. Large-volume reactor according to one of Claims 1 to 4, **characterized in that** the stator flange (46) defines, inside the premixing unit (30), an antechamber (48) located on the side of the stator flange (46) facing away from the reactor chamber (14), and the product inlet opening (66) discharges into this antechamber (48).

6. Large-volume reactor according to Claim 5, **characterized in that** the premixing unit (30) comprises a material inlet pipe (70) which passes through the antechamber (48), whose end ends radially inside the rotor casing (58) and the stator part (50) and has a further product inlet opening (68).

7. Large-volume reactor according to one of Claims 1 to 6, **characterized in that** the shaft (56) comprises a product inlet channel (116) running in the axial direction from which a radial product outlet (118) leads away, serving as a central product inlet opening (68').

8. Use of a large-volume reactor according to one of Claims 1 to 7 as a thin-film evaporator.

## Revendications

1. Réacteur de grand volume avec une enceinte (12) entourant une chambre de réacteur (14), un rotor de réacteur (78, 78') disposé dans la chambre de réacteur (14), une ouverture d'entrée de la chambre de réacteur (22) menant dans la chambre de réacteur (14), une sortie de produit (24) menant hors de la chambre de réacteur (14), et un dispositif de prémélange (30) comprenant un stator (42) ainsi qu'un rotor (44) monté sur un arbre entraîné (56) et coopérant avec celui-ci pour mélanger une matière première fournie par une ouverture d'entrée de produit (66), dont l'ouverture de sortie du dispositif (36) est disposée près de l'ouverture d'entrée de la chambre de réacteur (22), **caractérisé en ce que** le dispositif de prémélange (30) se présente sous la forme d'un dispositif de prémélange radial (38), dont la direction de transport principale (H) s'étend vers l'extérieur en direction radiale - par rapport à l'axe de rotation du rotor (44) - pendant le mélange de la matière première, le rotor (44) est réalisé en forme de coupe, un fond de rotor (54) est tourné vers la chambre de réacteur (14) et est monté sur l'arbre (56), une enveloppe de rotor (58) solidaire du fond de rotor (54) et disposée de façon concentrique à une partie de stator (50) du stator (42) se présentant sous la forme d'un cylindre creux ainsi que la partie de stator (50) présentent des passages radiaux (62), et la partie de stator (50) est placée radialement à l'intérieur par rapport à l'enveloppe de rotor (58) et est maintenue sur une bride de stator (46) écartée radialement vers l'extérieur de la partie de stator (50) et qui recouvre le rotor (44).

2. Réacteur de grand volume selon la revendication 1, **caractérisé en ce qu'**il se présente sous la forme d'un malaxeur ou d'un mélangeur.

3. Réacteur de grand volume selon la revendication 1 ou 2, **caractérisé en ce que** l'enceinte (12) présente un tuyau d'entrée (28) près de l'ouverture d'entrée de la chambre de réacteur (22), et le dispositif de prémélange (30) est posé sur le tuyau d'entrée (28) ou introduit dans le tuyau d'entrée (28).

4. Réacteur de grand volume selon l'une quelconque des revendications 1 à 3, **caractérisé en ce que** le stator (42) comprend une autre partie de stator (52, 52') de plus grand diamètre et disposée de façon concentrique à la partie de stator (50), l'enveloppe de rotor (54) du rotor (44) est disposée entre la partie de stator (50) et l'autre partie de stator (52, 52'), le rotor (44) comprend une autre enveloppe de rotor (60, 60') de plus grand diamètre et concentrique à l'enveloppe de rotor (58), et l'autre partie de stator (52, 52') est disposée entre l'enveloppe de rotor (58) et l'autre enveloppe de rotor (60, 60').

5. Réacteur de grand volume selon l'une quelconque des revendications 1 à 4, **caractérisé en ce que** la bride de stator (46) délimite, à l'intérieur du dispositif de prémélange (30), une chambre d'accès (48) agencée sur le côté de la bride de stator (46) situé à l'opposé de la chambre de réacteur (14) et l'ouverture d'entrée de produit (66) débouche dans cette chambre d'accès (48).

6. Réacteur de grand volume selon la revendication 5, **caractérisé en ce que** le dispositif de prémélange (30) présente un tube d'arrivée de produit (70) passant à travers la chambre d'accès (48), dont l'extrémité se termine radialement à l'intérieur de l'enveloppe de rotor (58) et de la partie de stator (50) et présente une autre ouverture d'entrée de produit (68).

7. Réacteur de grand volume selon l'une quelconque des revendications 1 à 6, **caractérisé en ce que** l'arbre (56) présente un canal d'entrée de produit (116) s'étendant en direction axiale, duquel part une sortie de produit radiale (118) qui sert d'ouverture centrale d'entrée de produit (68').

8. Utilisation d'un réacteur de grand volume selon l'une quelconque des revendications 1 à 7 comme évaporateur à couche mince.
